# EUROPEAN PATENT SPECIFICATION

(11) **EP 4 075 177 B1**
(45) Date of publication and mention of the grant of the patent: **24.09.2025**
(21) Application number: 21899939.9
(22) Date of filing: 26.11.2021
(51) Int. Cl.: G02B 6/44, B65H 51/22, B65H 51/04, B65H 51/08, B65H 51/20, B65H 57/14, B65H 57/26

(54) **CENTRAL-TUBE-TYPE MICRO-CABLE PROCESSING SYSTEM AND MANUFACTURING PROCESS**
MIKROKABELBEARBEITUNGSSYSTEM VOM ZENTRALROHRTYP UND HERSTELLUNGSVERFAHREN
SYSTÈME DE TRAITEMENT DE MICRO-CÂBLE DE TYPE TUBE CENTRAL ET PROCÉDÉ DE FABRICATION

(30) Priority: 03.12.2020 CN 202011400282
(43) Date of publication of application: 19.10.2022
(73) Proprietor: Hengtong Optic-Electric Co., Ltd., Suzhou, Jiangsu 215000 (CN)
(72) Inventor: WU, Di, Suzhou, Jiangsu 215000 (CN); SHI, Huiping, Suzhou, Jiangsu 215000 (CN); HAN, Yufeng, Suzhou, Jiangsu 215000 (CN); LI, Long, Suzhou, Jiangsu 215000 (CN); WU, Jinhua, Suzhou, Jiangsu 215000 (CN); LIU, Peidong, Suzhou, Jiangsu 215000 (CN); WU, Binhua, Suzhou, Jiangsu 215000 (CN); LIU, Yang, Suzhou, Jiangsu 215000 (CN); SUN, Jian, Suzhou, Jiangsu 215000 (CN); CHEN, Long, Suzhou, Jiangsu 215000 (CN); LI, Huiqiang, Suzhou, Jiangsu 215000 (CN); QIAN, Xiaoqian, Suzhou, Jiangsu 215000 (CN)
(74) Representative: Chung, Hoi Kan
(86) International application number: PCT/CN2021/133520
(87) International publication number: WO 2022/116907

(56) References cited:
- WO-A1-2016/060647
- CN-A- 105 253 699
- CN-A- 106 743 980
- CN-A- 107 728 277
- CN-A- 107 728 277
- CN-A- 109 143 510
- CN-A- 109 143 510
- CN-A- 110 104 498
- CN-A- 112 433 316
- US-A1- 2012 006 087
- US-A1- 2020 116 967
- US-B1- 8 489 219

## Description

### FIELD OF THE INVENTION

The present invention relates to the field of optical cable fabricating apparatus and fabricating process, and more particularly to a system and method for fabricating a central-tube micro cable.

### DESCRIPTION OF THE RELATED ART

With the rapid development of FTTX, data services are growing exponentially. Multimedia information such as voice, data and images needs to be transported over optical cables. Indoor and outdoor optical cables need larger network capacity, wider bandwidth and smaller size to meet the requirements for layout with existing resources.

Central-tube micro cables can meet the requirements of indoor environment for softness and low smoke, and they also have good mechanical characteristics and water blocking property required by outdoor environment, so that they are suitable for indoor and outdoor environments.

During the production process, the central-tube micro cable is prepared successively through the coating process and the jacketing process. During preparation, when the spool placed on the optical fiber pay-off rack is to be replaced, it is necessary to suspend the procedure on the production line and start the production line to continue running after the replacement. Therefore, it is necessary to design a preparation system that can not only reduce the procedure transition time and improve the machining efficiency through cooperation between the coating extruder and the jacket extruder, but also solve the problem that difference in shrinkage levels of the central-tube micro cables due to different storage times of the tubes results in the excess length of the finished product failing to meet the process requirements.

Prior art document CN 107728277 A discloses an integrated production line of a central beam pipe type optical cable. The integrated production line comprises a coloring device, a curing device, a secondary plastic coating device, a pipe storage device and a sheathing device which are sequentially connected from front to back, wherein the coloring device is used for coloring all optical fibers entering the coloring device with different colors; the curing device is used for rapidly curing ink on the colored optical fibers; the secondary plastic coating device is used for performing secondary plastic coating on allthe cured colored optical fibers, and a loose casing pipe is formed; the pipe storage device is used for storing the loose casing pipe; the sheathing device is used for sheathing the loose casing pipe.

### SUMMARY OF THE INVENTION

The present invention is intended to provide a system and method for fabricating a central-tube micro cable which is capable of continued production during spool replacement. The invention can not only reduce the procedure transition time and improve the machining efficiency, but also solve the problem of difference in shrinkage levels of the central-tube micro cables due to different storage times of the tubes, thereby ensuring consistent excess lengths of the finished products to meet the process requirements.

To address the technical problem mentioned above, the present invention provides a system for fabricating a central-tube micro cable according to claim 1, including a coating extruder, a coating basin, a first traction device, a first wire storage device, a jacket extruder, a second traction device, a second wire storage device and a wire retrieval assembly that are sequentially arranged. The first wire storage device and the second wire storage device each include a rack body, a wire storage rack, a wire turning rack and a steering wheel. The wire storage rack and the wire turning rack are positioned on the same side of the rack body. The steering wheel is rotatably connected to the rack body via a driving element and positioned at the end of the rack body close to the wire storage rack. The wire body is conveyed to the wire storage rack through the wire turning rack, then transferred to the steering wheel and then can be transported through the wire turning rack again. The wire storage rack includes a plurality of supports arranged in parallel and a first guide rail and a second guide rail arranged on the support. The first guide rail and the second guide rail are positioned respectively at the upper end and lower end of the support and are both rotatably connected to the support. The wire turning rack includes a first steering portion, a second steering portion and a third steering portion. The first steering portion and the second guide rail are coplanar. The first steering portion is configured to transfer the wire body to the second guide rail. The second steering portion and the third steering portion are both positioned above the first steering portion. The second steering portion and the third steering portion are arranged to be inclined and coplanar. The second steering portion includes a first end portion and a second end portion. The third steering portion includes a third end portion and a fourth end portion. The first end portion and the first guide rail are coplanar. The second end portion is arranged close to the third end portion, and the fourth end portion and the first steering portion are coplanar.

Preferably, the first steering portion is semicircular in shape, and the arc-shaped portion of the first steering portion is arranged far from the wire storage rack.

Preferably, the second steering portion and the third steering portion both are arc-shaped and are symmetric about the center.

Preferably, the first steering portion, the second steering portion and the third steering portion are each provided with several rollers thereon.

Preferably, the first end portion, the second end portion, the third end portion and the fourth end portion each include a guide assembly. The guide assembly includes two first rotary wheels and two second rotary wheels. The axial direction of the first rotary wheels is horizontal, and the axial direction of the second rotary wheels is vertical. The wire body is passed through the two first rotary wheels and transferred to a position between the two second rotary wheels.

Preferably, a steering wheel is rotatably provided on the rack body.

Another object of the present invention is to provide a fabricating method for a central-tube micro cable according to claim 7, including the steps of:
S1: introducing optical fibers of natural color that have been qualified through inspection in storage in order to be colored;
S2: placing the colored optical fibers on an optical fiber pay-off rack for payoff and use;
S3: bundling the colored optical fibers, passing them through the coating extruder and filling them with fiber paste and secondary coating material;
S4: cooling a tube exiting the coating extruder through a coating basin and bringing it, by a first traction device, to a second basin;
S5: introducing the tube into the first wire storage device after passing the tube through a coating blow dryer, a diameter gauge, a first traction device and a dancer;
S6: passing a reinforcer placed on a reinforcer pay-off rack and a tube from the first wire storage device jointly through a jacket extruder to obtain a cable;
S7: cooling, blow drying and performing online defect inspection on the cable from the jacket extruder;
S8: transferring the cable to a second wire storage device by a second traction device;
S9: transferring the cable to a wire retrieval assembly by a second wire storage device for retrieval.

The present invention has the following beneficial effects.

Cooperation between the coating extruder and the jacket extruder can not only reduce the procedure transition time and improve the machining efficiency, but also solve the problem that difference in shrinkage levels of the central-tube micro cables due to different storage times of the tubes results in excess length of the finished product failing to meet the process requirements.

### BRIEF DESCRIPTION OF THE DRAWINGS

FIG. 1 is an overall schematic view of the present invention;
FIG. 2 is a partial schematic view of the present invention; and
FIG. 3 is a schematic view of a wire turning rack according to the present invention.

### Reference numbers:

1 optical fiber pay-off rack; 21 coating extruder; 22 coating basin; 23 first traction device; 3 first wire storage device; 41 jacket extruder; 42 second traction device; 5 second wire storage device; 6 wire retrieval assembly; 71 rack body; 72 wire storage rack; 721 support; 722 first guide rail; 723 second guide rail; 73 wire turning rack; 731 first steering portion; 732 second steering portion; 7321 first end portion; 7322 second end portion; 733 third steering portion; 7331 third end portion; 7332 fourth end portion; 734 roller; 735 first rotary wheel; 736 second rotary wheel; 74 steering wheel

### DETAILED DESCRIPTION OF THE PREFERRED EMBODIMENTS

The present invention will be further explained with reference to the drawings and particular embodiments below, so that the those skilled in the art can better understand and implement the present invention, but the listed embodiments are not intended as limitations to the present invention.

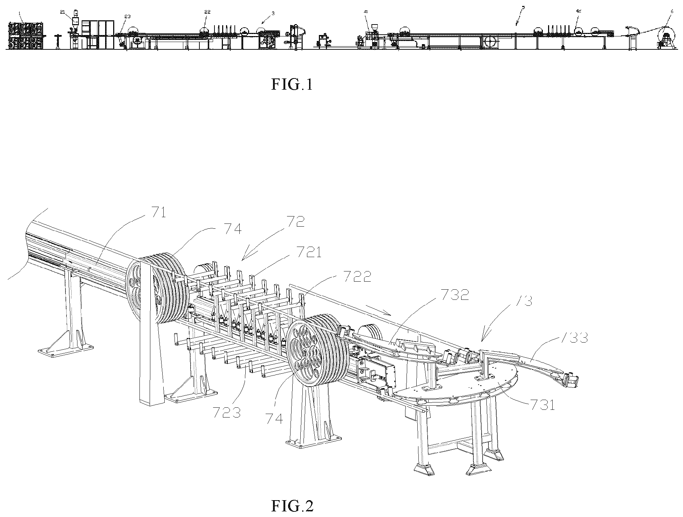

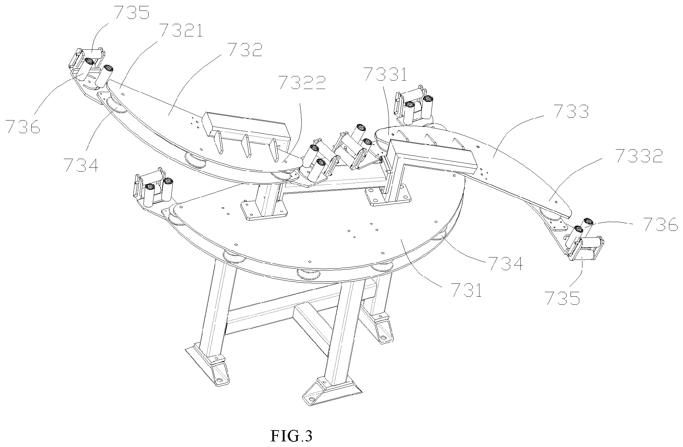

Referring to FIGs. 1-3, a system for fabricating a central-tube micro cable according to an embodiment of the present invention includes a coating extruder 21, a coating basin 22, a first traction device 23, a first wire storage device 3, a jacket extruder 41, a second traction device 42, a second wire storage device 5 and a wire retrieval assembly 6 that are sequentially arranged. Cooperation between the coating extruder 21 and the jacket extruder 41 can not only reduce the procedure transition time and improve the machining efficiency, but also solve the problem that difference in shrinkage levels of the central-tube micro cables due to different storage times of the tubes results in excess length of the finished failing to meet the process requirements.

To facilitate storage of the wire body by the first wire storage device 3 and the second wire storage device 5, the first wire storage device 3 is configured to store the tube that has gone through a coating blow dryer, a diameter gauge, a first traction device and a dancer, and the second wire storage device 5 is configured to store an optical cable that has been cooled and blow dried and has gone through online defect inspection. The first wire storage device 3 and the second wire storage device 5 each includes a rack body 71, a wire storage rack 72, a wire turning rack 73 and a steering wheel 74. The wire storage rack 72 and the wire turning rack 73 are provided on the same side of the rack body 71. The steering wheel 74 is rotatably connected to the rack body 71 via a driving element and is positioned at the end of the rack body 71 close to the wire storage rack. The wire body is conveyed to the wire storage rack 72 by the wire turning rack 73, then transferred to the steering wheel 74, and then can be transported by the wire turning rack 73 again. The tube and the jacket are wound around the wire turning rack 73, the wire storage rack 72 and the steering wheel 74 respectively before being transported through the wire turning rack 73 again in the original direction, thereby accomplishing storage of the tube and the optical cable.

The wire storage rack 72 includes a plurality of supports 721 arranged in parallel and a first guide rail 722 and a second guide rail 723 which are provided on the rack body 71. The supports 721 are arranged along the length of the rack body 71. The first guide rail 722 and the second guide rail 723 are provided respectively at the upper end and lower end of the rack body 71 and are both rotatably connected to the rack body 71. The rotatably arranged first guide rail 722 and second guide rail 723 can reduce the resistance in transportation of the tube and the jacket, thereby reducing wear of the tube and the optical cable as well as improving transportation efficiency of the tube and the optical cable.

A steering wheel is rotatably provided on the rack body 71. In this embodiment, two transfer wheels are rotatably provided on the rack body 71. The two transfer wheels are positioned respectively at two ends of the wire storage rack 72. Also, several wire grooves are provided circumferentially on the transfer wheel. The axial direction of the first guide rail 722 and the second guide rail 723 is parallel to the axial direction of the transfer wheels, and the distance between the two outermost wire grooves is smaller than the axial length of the first guide rail 722 and the second guide rail 723. The plurality of wire grooves can not only improve conveyance efficiency of the tube and the jacket, but also separating adjacent tubes and adjacent jackets, thereby preventing entangling of the tubes and optical cables during transportation.

The wire turning rack 73 includes a first steering portion 731, a second steering portion 732 and a third steering portion 733. The first steering portion 731 and the second guide rail 723 are coplanar. The first steering portion 731 is configured to transfer the wire body to the second guide rail 723. The second steering portion 732 and the third steering portion 733 are both provided above the first steering portion 731. The second steering portion 732 and the third steering portion 733 are arranged to be inclined and coplanar. The second steering portion 732 includes a first end portion 7321 and a second end portion 7322. The third steering portion 733 includes a third end portion 7331 and a fourth end portion 7332. The first end portion 7321 of the second steering portion 732 and the first guide rail 722 are coplanar. The second end portion 7322 is arranged close to the third end portion 7331. The fourth end portion 7332 and the first steering portion 731 are coplanar.

In transportation of the tube, the tube is driven by the first traction device 23 to be transported along the length of the rack body 71. The tube is first moved to the first steering portion 731, and moved along the periphery of the first steering portion 731 from one end to the other end thereof. Then the tube is guided by the steering wheel to move along the direction of the rack body 71. At this point, the tube is positioned on the second guide rail 723. The rotatably arranged second guide rail 723 serves to reduce sagging of the tube due to gravity during transportation and reduce deformation of the tube during transportation as well. Then the tube moves to the steering wheel 74. The tube is wound around the steering wheel 74 from below to above, so that the tube continues to move along the length of the rack body 71. At this point, the tube is positioned above the first guide rail 722, and the first guide rail 722 serves to reduce deformation of the tube. Then the tube is transported to the first end portion 7321 of the second steering portion 732 and is moved to the second end portion 7322 along the periphery of the second steering portion 732. As the second end portion 7322 of the second steering portion 732 is close to the third end portion 7331 of the third steering portion 733, the tube is transported to the third end portion 7331 through the second end portion 7322. The tube moves along the periphery of the third steering portion 733 from the third end portion 7331 to the fourth end portion 7332, thereby accomplishing storage of the tube. Likewise, the second wire storage device 5 can also accomplish storage of the optical cable according to the steps described above.

The first steering portion 731 is semicircular in shape, and the arc-shaped portion of the first steering portion 731 is arranged far from the wire storage rack 72. The first steering portion 731 of the semicircular shape can facilitate transportation of the tube and the optical cable, thereby reducing impairment to the tube and the jacketing during conveyance. The second steering portion 732 and the third steering portion 733 are both arc-shaped. In this embodiment, the second steering portion 732 and the third steering portion 733 are symmetric about the center, thereby facilitating production of the second steering portion 732 and the third steering portion 733 as well as reducing impairment to the tube and the jacket.

The first end portion 7321, the second end portion 7322, the third end portion 7331 and the fourth end portion 7332 each include a guide assembly. The guide assembly includes two first rotary wheels 735 and two second rotary wheels 736. The axial direction of the first rotary wheels 735 is horizontal and the axial direction of the second rotary wheels 736 is vertical. The wire body is passed through the two first rotary wheels 735 and is transferred to a position between the two second rotary wheels 736. In this embodiment, the vertical positions of the tube and the jacket are limited through cooperation between the two first rotary wheels 735 and the horizontal positions of the tube and the optical cable are limited through cooperation between the two second rotary wheels 736. In this way, the positioning accuracy of the tube and the optical cable during transportation can be improved through cooperation between the first rotary wheels 735 and the second rotary wheels 736. Meanwhile, the first rotary wheel 735 and the second rotary wheel 736 provided on the second steering portion 732 are both rotatably connected thereto, and the first rotary wheel 735 and the second rotary wheel 736 provided on the third steering portion 733 are also both rotatably connected thereto. Therefore, the rotatably provided first rotary wheels 735 and second rotary wheels 736 can also serve to reduce the kinetic resistance during conveyance of the tube and the optical cable.

The first steering portion 731, the second steering portion 732 and the third steering portion 733 are each provided with several rollers 734, thereby reducing resistance in movement of the tube and the optical cable as well as reducing impairment to surfaces of the tube and the optical cable.

A fabricating method for a central-tube micro cable includes the following steps.

S1: introducing optical fibers of natural color that have been qualified through inspection in storage in order to be colored.

S2: placing the colored optical fibers on an optical fiber pay-off rack 1 for payoff and use.

S3: bundling the colored optical fibers, passing them through the coating extruder 21 and filling them with fiber paste and secondary coating material.

S4: cooling a tube, for 2-12 colored optical fibers that have been bundled, exiting the coating extruder 21 through a coating basin 22 and bringing it, by a first traction device 23, to a second basin.

S5: introducing the tube into a first wire storage device after passing the tube through a coating blow dryer, a diameter gauge, a first traction device and a dancer;.

During transportation of the tube, the tube is driven by the first traction device 23 and transported along the length of the rack body 71. The tube first moves to the first steering portion 731, and moves along the periphery of the first steering portion 731 from one end to the other end thereof. Then the tube is guided by the steering wheel to move along the direction of the rack body 71. At this point, the tube is positioned on the second guide rail 723. Then the tube moves to the steering wheel 74. The tube is wound around the steering wheel 74 from below to above, so that the tube continues to move along the length of the rack body 71. At this point, the tube is positioned above the first guide rail 722. Then the tube is transported to the first end portion 7321 of the second steering portion 732, and moves along the periphery of the second steering portion 732 to the second end portion 7322. As the second end portion 7322 of the second steering portion 732 is close to the third end portion 7331 of the third steering portion 733, the tube is transported to the third end portion 7331 through the second end portion 7322. The tube moves along the periphery of the third steering portion 733 from the third end portion 7331 to the fourth end portion 7332, thereby accomplishing storage of the tube.

S6: passing a reinforcer placed on a reinforcer pay-off rack and a tube from the first wire storage device 3 jointly through a jacket extruder 41 to obtain a cable.

S7: cooling, blow drying and performing online defect inspection on the cable from the jacket extruder 41.

S8: transferring the cable to a second wire storage device 5 by a second traction device 42.

During transportation of the jacket, the jacket is driven by the second traction device 42 and transported along the length of the rack body 71. The jacket first moves to the first steering portion 731, and moves along the periphery of the first steering portion 731 from one end to the other end thereof. Then the jacket is guided by the steering wheel to move along the direction of the rack body 71. At this point, the jacket is positioned above the second guide rail 723. Then the jacket moves to the steering wheel 74. The jacket is wound around the steering wheel 74 from below to above, so that the jacket continues to move along the length of the rack body 71. At this point, the jacket is positioned above the first guide rail 722. Then the jacket is transported to the first end portion 7321 of the second steering portion 732, and moves along the periphery of the second steering portion 732 to the second end portion 7322. As the second end portion 7322 of the second steering portion 732 is close to the third end portion 7331 of the third steering portion 733, the jacket is transported to the third end portion 7331 through the second end portion 7322. The jacket moves along the periphery of the third steering portion 733 from the third end portion 7331 to the fourth end portion 7332, thereby accomplishing storage of the optical cable.

S9: transferring the optical cable to a wire retrieval assembly 6 by a second wire storage device 5 for retrieval.

The above-mentioned embodiments are only preferred embodiments for fully explaining the present invention, and the scope of protection of the present invention is not limited thereto. Equivalent substitutions or changes made by those skilled in the technical field on the basis of the present invention shall fall within the scope of protection of the present invention. The scope of protection of the invention is defined by the claims.

## Claims

1. A system for fabricating a central-tube micro cable, comprising a coating extruder (21), a coating basin (22), a first traction device (23), a first wire storage device (3), a jacket extruder (41), a second traction device (42), a second wire storage device (5) and a wire retrieval assembly (6) that are sequentially arranged, the first wire storage device (3) and the second wire storage device (5) each comprising a rack body (71), a wire storage rack (72), a wire turning rack (73) and a steering wheel (74), the wire storage rack (72) and the wire turning rack (73) being provided on the same side of the rack body (71), the steering wheel (74) being rotatably connected to the rack body (71) via a driving element and positioned at an end of the rack body (71), wherein a wire body is capable of being conveyed to the wire storage rack (72) through the wire turning rack (73), then transferred to the steering wheel (74) and then capable of being transported through the wire turning rack (73), wherein the wire storage rack (72) comprises a plurality of supports (721) arranged in parallel, a first guide rail (722) and a second guide rail (723) provided on the support (721), and the first guide rail (722) and the second guide rail (723) are provided respectively at an upper end and an lower end of the support (721), wherein the first guide rail (722) and the second guide rail (723) are both rotatably connected to the support (721),
**characterized in that**,
wherein the wire turning rack (73) comprises a first steering portion (731), a second steering portion (732) and a third steering portion (733), the first steering portion (731) and the second guide rail (723) are coplanar, the first steering portion (731) is configured to transfer the wire body to the second guide rail (723); the second steering portion (732) and the third steering portion (733) are both positioned above the first steering portion (731), the second steering portion (732) and the third steering portion (733) are arranged to be inclined and coplanar, the second steering portion (732) comprises a first end portion (7321) and a second end portion (7322), the third steering portion (733) comprises a third end portion (7331) and a fourth end portion (7332), the first end portion (7321) and the first guide rail (722) are coplanar, the second end portion (7322) is arranged close to the third end portion (7331), wherein the fourth end portion (7332) and the first steering portion (731) are coplanar.

2. The system for fabricating a central-tube micro cable of claim 1, wherein the first steering portion (731) is semicircular in shape and an arc-shaped portion of the first steering portion (731) is arranged away from the wire storage rack (72).

3. The system for fabricating a central-tube micro cable of claim 1 or 2, wherein the second steering portion (732) and the third steering portion (733) are both arc-shaped, wherein the second steering portion (732) and the third steering portion (733) are centrally symmetrical.

4. The system for fabricating a central-tube micro cable of any one of claims 1 to 3, wherein the first steering portion (731), the second steering portion (732) and the third steering portion (733) are each provided with several rollers (734) thereon.

5. The system for fabricating a central-tube micro cable of any one of claims 1 to 4, wherein the first end portion (7321), the second end portion (7322), the third end portion (7331) and the fourth end portion (7332) each comprises a guide assembly, the guide assembly comprises two first rotary wheels (735) and two second rotary wheels (736), an axial direction of the first rotary wheels (735) is horizontal, and an axial direction of the second rotary wheel (736) is vertical, and the wire body is passed through the two first rotary wheels (735) and transferred to a position between the two second rotary wheels (736).

6. The system for fabricating a central-tube micro cable of any one of claims 1 to 5, wherein a transfer wheel is rotatably provided on the rack body (71).

7. A method for using a system for fabricating a central-tube micro cable according to any one of claims 1 to 6, comprising steps of:
S1: introducing optical fibers of natural color that have been qualified through inspection in storage, Performing coloring process;
S2: placing the colored optical fibers on an optical fiber pay-off rack (1) for payoff use;
S3: bundling the colored optical fibers, passing them through a coating extruder (21) and filling them with fiber paste and secondary coating material;
S4: cooling a tube exiting the coating extruder (21) through a coating basin (22) and bringing it to a second basin by a first traction device (23);
S5: introducing the tube into a first wire storage device (3) after passing the tube through a coating blow dryer, a diameter gauge, the first traction device (23) and a dancer;
S6: passing a reinforcer placed on a reinforcer pay-off rack and the tube from the first wire storage device (3) jointly through a jacket extruder (41) to obtain a cable;
S7: cooling, blow drying and performing online defect inspection on the cable from the jacket extruder (41);
S8: transferring the cable to a second wire storage device (5) by a second traction device (42); and
S9: transferring the cable to a wire retrieval assembly (6) through the second wire storage device (5) for retrieval.

## Patentansprüche

1. System zur Herstellung eines Zentralschlauch-Mikrokabels, das einen Beschichtungsextruder (21), ein Beschichtungsbecken (22), eine erste Zugvorrichtung (23), eine erste Kabelspeichervorrichtung (3), einen Mantelextruder (41), eine zweite Zugvorrichtung (42), eine zweite Kabelspeichervorrichtung (5) und eine Kabelrückholbaugruppe (6) umfasst, die hintereinander angeordnet sind, wobei die erste Kabelspeichervorrichtung (3) und die zweite Kabelspeichervorrichtung (5) jeweils einen Gestellkörper (71), ein Kabelspeichergestell (72), ein Kabelwendegestell (73) und ein Lenkrad (74) umfassen, wobei das Kabelspeichergestell (72) und das Kabelwendegestell (73) auf der gleichen Seite des Gestellkörpers (71) vorgesehen sind, wobei das Lenkrad (74) über ein Antriebselement drehbar mit dem Gestellkörper (71) verbunden und an einem Ende des Gestellkörpers (71) positioniert ist, wobei ein Kabelkörper durch das Kabelwendegestell (73) zum Kabelspeichergestell (72) befördert, dann zum Lenkrad (74) transferiert und dann durch das Kabelwendegestell (73) transportiert werden kann, wobei das Kabelspeichergestell (72) mehrere parallel angeordnete Träger (721) und eine erste Führungsschiene (722) und eine zweite Führungsschiene (723) an dem Träger (721) umfasst, wobei sich die erste Führungsschiene (722) und die zweite Führungsschiene (723) jeweils an einem oberen und einem unteren Ende des Trägers (721) befinden und die erste Führungsschiene (722) und die zweite Führungsschiene (723) beide drehbar mit dem Träger (721) verbunden sind, **dadurch gekennzeichnet, dass**
das Kabelwendegestell (73) einen ersten Lenkabschnitt (731), einen zweiten Lenkabschnitt (732) und einen dritten Lenkabschnitt (733) umfasst, wobei der erste Lenkabschnitt (731) und die zweite Führungsschiene (723) koplanar angeordnet sind und der erste Lenkabschnitt (731) dazu ausgelegt ist, den Kabelkörper an die zweite Führungsschiene (723) zu transferieren; der zweite Lenkabschnitt (732) und der dritte Lenkabschnitt (733) beide über dem ersten Lenkabschnitt (731) positioniert sind, der zweite Lenkabschnitt (732) und der dritte Lenkabschnitt (733) geneigt und koplanar angeordnet sind, der zweite Lenkabschnitt (732) einen ersten Endabschnitt (7321) und einen zweiten Endabschnitt (7322) umfasst, der dritte Lenkabschnitt (733) einen dritten Endabschnitt (7331) und einen vierten Endabschnitt (7332) umfasst, wobei der erste Endabschnitt (7321) und die erste Führungsschiene (722) koplanar angeordnet sind und der zweite Endabschnitt (7322) nahe dem dritten Endabschnitt (7331) angeordnet ist, wobei der vierte Endabschnitt (7332) und der erste Lenkabschnitt (731) koplanar angeordnet sind.

2. System zur Herstellung eines Zentralschlauch-Mikrokabels nach Anspruch 1, wobei der erste Lenkabschnitt (731) halbkreisförmig ist und ein bogenförmiger Abschnitt des ersten Lenkabschnitts (731) vom Kabelspeichergestell (72) entfernt angeordnet ist.

3. System zur Herstellung eines Zentralschlauch-Mikrokabels nach Anspruch 1 oder 2, wobei der zweite Lenkabschnitt (732) und der dritte Lenkabschnitt (733) beide bogenförmig sind und zentralsymmetrisch angeordnet sind.

4. System zur Herstellung eines Zentralschlauch-Mikrokabels nach einem der Ansprüche 1 bis 3, wobei der erste Lenkabschnitt (731), der zweite Lenkabschnitt (732) und der dritte Lenkabschnitt (733) jeweils mit mehreren Rollen (734) versehen sind.

5. System zur Herstellung eines Zentralschlauch-Mikrokabels nach einem der Ansprüche 1 bis 4, wobei der erste Endabschnitt (7321), der zweite Endabschnitt (7322), der dritte Endabschnitt (7331) und der vierte Endabschnitt (7332) jeweils eine Führungsbaugruppe umfassen, wobei die Führungsbaugruppe zwei erste Drehräder (735) und zwei zweiten Drehrädern (736) umfasst, eine axiale Richtung der ersten Drehräder (735) horizontal und eine axiale Richtung des zweiten Drehrads (736) vertikal ist und der Kabelkörper durch die beiden ersten Drehräder (735) geführt und in eine Position zwischen den beiden zweiten Drehrädern (736) überführt wird.

6. System zur Herstellung eines Zentralschlauch-Mikrokabels nach einem der Ansprüche 1 bis 5, wobei ein Transferrad drehbar am Gestellkörper (71) angebracht ist.

7. Verfahren zur Verwendung eines Systems zur Herstellung eines Zentralschlauch-Mikrokabels nach einem der Ansprüche 1 bis 6, umfassend die folgenden Schritte:
S1: Einführen von naturfarbigen, durch Lagerprüfung qualifizierten Glasfasern, Durchführen des Färbeprozesses;
S2: Platzieren der gefärbten Glasfasern auf einem Glasfaser-Abwickelgestell (1) zum Abwickeln;
S3: Bündeln der gefärbten Glasfasern, Durchführen durch einen Beschichtungsextruder (21) und Füllen mit Faserpaste und sekundärem Beschichtungsmaterial;
S4: Abkühlen eines den Beschichtungsextruder (21) verlassenden Schlauchs durch ein Beschichtungsbecken (22) und Transportieren in ein zweites Becken durch eine erste Zugvorrichtung (23);
S5: Einführen des Schlauchs in eine erste Kabelspeichervorrichtung (3), nachdem der Schlauch einen Beschichtungstrockner, ein Durchmessermessgerät, die erste Zugvorrichtung (23) und einen Tänzer durchlaufen hat;
S6: Gemeinsames Durchführen eines auf einem Verstärkungsabwickelgestell platzierten Verstärkers und des Schlauchs aus der ersten Kabelspeichervorrichtung (3) durch einen Mantelextruder (41), um ein Kabel zu erhalten;
S7: Abkühlen, Trocknen und Durchführen einer Online-Fehlerprüfung am Kabel aus dem Mantelextruder (41);
S8: Transfer des Kabels an eine zweite Kabelspeichervorrichtung (5) durch eine zweite Zugvorrichtung (42); und
S9: Transfer des Kabels durch die zweite Kabelspeichervorrichtung (5) an eine Kabelrückholbaugruppe (6) zur Rückholung.

## Revendications

1. Système de fabrication d'un câble micro à tube central, comprenant une extrudeuse de revêtement (21), un bassin de revêtement (22), un premier dispositif de traction (23), un premier dispositif de stockage de fil (3), une extrudeuse de gaine (41), un second dispositif de traction (42), un second dispositif de stockage de fil (5) et un ensemble de récupération de fil (6) agencés séquentiellement, dans lequel : le premier dispositif de stockage de fil (3) et le second dispositif de stockage de fil (5) comprennent chacun un corps de châssis (71), un support de stockage de fil (72), un support de déviation de fil (73) et une poulie de guidage (74) ; le support de stockage de fil (72) et le support de déviation de fil (73) sont disposés sur un même côté du corps de châssis (71) ; la poulie de guidage (74) est connectée de manière rotative au corps de châssis (71) via un élément d'entraînement et positionnée à une extrémité du corps de châssis (71) ; un corps de fil est configuré pour être acheminé vers le support de stockage de fil (72) via le support de déviation de fil (73), puis transféré vers la poulie de guidage (74) avant d'être transporté à travers le support de déviation de fil (73) ; le support de stockage de fil (72) comprend une pluralité de supports (721) agencés en parallèle, un premier rail de guidage (722) et un second rail de guidage (723) montés sur ledit support (721) ; le premier rail de guidage (722) et le second rail de guidage (723) sont disposés respectivement à une extrémité supérieure et une extrémité inférieure du support (721) ; dans lequel le premier rail de guidage (722) et le second rail de guidage (723) sont tous deux connectés de manière rotative audit support (721),
**caractérisé en ce que**, le support de déviation de fil (73) comprend une première section de direction (731), une deuxième section de direction (732) et une troisième section de direction (733), la première section de direction (731) et le second rail de guidage (723) étant coplanaires, la première section de direction (731) étant configurée pour transférer le corps de fil vers le second rail de guidage (723) ; la deuxième section de direction (732) et la troisième section de direction (733) sont toutes deux positionnées au-dessus de la première section de direction (731) ; la deuxième section de direction (732) et la troisième section de direction (733) sont agencées en orientation inclinée et coplanaires entre elles ; la deuxième section de direction (732) comprend une première partie d'extrémité (7321) et une deuxième partie d'extrémité (7322) ; la troisième section de direction (733) comprend une troisième partie d'extrémité (7331) et une quatrième partie d'extrémité (7332) ; la première partie d'extrémité (7321) et le premier rail de guidage (722) sont coplanaires ; la deuxième partie d'extrémité (7322) est disposée à proximité immédiate de la troisième partie d'extrémité (7331) ; la quatrième partie d'extrémité (7332) et la première section de direction (731) sont coplanaires.

2. Système de fabrication d'un câble micro à tube central selon la revendication 1, **caractérisé en ce que**, la première section de direction (731) est de forme semi-circulaire et une partie en forme d'arc de la première section de direction (731) est disposée à l'écart du support de stockage de fil (72).

3. Système de fabrication d'un câble micro à tube central selon la revendication 1 ou 2, **caractérisé en ce que**, la deuxième section de direction (732) et la troisième section de direction (733) sont toutes deux en forme d'arc, ladite deuxième section de direction (732) et ladite troisième section de direction (733) étant symétriques au centre.

4. Système de fabrication d'un câble micro à tube central selon l'une quelconque des revendications 1 à 3, **caractérisé en ce que**, la première section de direction (731), la deuxième section de direction (732) et la troisième section de direction (733) sont chacune dotées de plusieurs rouleaux (734).

5. Système de fabrication d'un câble micro à tube central selon l'une quelconque des revendications 1 à 4, **caractérisé en ce que**, la première partie d'extrémité (7321), la deuxième partie d'extrémité (7322), la troisième partie d'extrémité (7331) et la quatrième partie d'extrémité (7332) comprennent chacune un ensemble de guidage, ledit ensemble de guidage comprend deux premières roues rotatives (735) et deux deuxièmes roues rotatives (736), une direction axiale des premières roues rotatives (735) est horizontale, une direction axiale des deuxièmes roues rotatives (736) est verticale, et le corps du fil est passé à travers les deux premières roues rotatives (735) puis transféré en position entre les deux deuxièmes roues rotatives (736).

6. Système de fabrication d'un câble micro à tube central selon l'une quelconque des revendications 1 à 5, **caractérisé en ce qu'**une roue de transfert est disposée de manière rotative sur le corps de support (71).

7. Procédé d'utilisation d'un système de fabrication d'un câble micro à tube central selon l'une quelconque des revendications 1 à 6, comprenant les étapes suivantes :
Étape 1 : introduire des fibres optiques de couleur naturelle ayant été qualifiées par contrôle en stockage, puis réaliser un processus de coloration ;
Étape 2 : placer les fibres optiques colorées sur un support de déroulement de fibres optiques (1) pour utilisation en déroulement ;
Étape 3 : regrouper les fibres optiques colorées, les faire passer à travers une extrudeuse de revêtement (21) et remplissage avec de la pâte de fibres et un matériau de revêtement secondaire ;
Étape 4 : refroidir un tube sortant de l'extrudeuse de revêtement (21) dans un bassin de revêtement (22) puis l'amener à un second bassin via un premier dispositif de traction (23) ;
Étape 5 : introduire le tube dans un premier dispositif de stockage de fil (3) après son passage à travers un séchoir à air pour revêtement, un jaugeur de diamètre, le premier dispositif de traction (23) et un régulateur de tension ;
Étape 6 : faire passer conjointement un renfort positionné sur un support de déroulement de renfort et le tube provenant du premier dispositif de stockage de fil (3) à travers une extrudeuse de gaine (41) pour former un câble ;
Étape 7 : refroidir, sécher à l'air et contrôler les défauts en ligne sur le câble sortant de l'extrudeuse de gaine (41) ;
Étape 8 : transférer le câble vers un second dispositif de stockage de fil (5) à l'aide d'un second dispositif de traction (42) ; et
Étape 9 : acheminer le câble vers un ensemble de récupération de fil (6) via le second dispositif de stockage de fil (5) pour récupération finale.
